# EUROPEAN PATENT APPLICATION

(11) **EP 4 084 294 A1**
(43) Date of publication of application: **02.11.2022**
(21) Application number: 21171094.2
(22) Date of filing: 29.04.2021
(51) Int. Cl.: H02K 1/20, H02K 9/04

(54) **GENERATOR FOR PRODUCING ELECTRICAL POWER AND WIND TURBINE**

(71) Applicant: Siemens Gamesa Renewable Energy A/S, 7330 Brande (DK)
(72) Inventor: Christensen, Jens Brix, 7100 Vejle (DK)
(74) Representative: SGRE-Association

(57) **Abstract**

Generator (4), in particular of a wind turbine (1), for producing electrical power comprising
- a stator (5) comprising stacked lamination sheets (21, 21a, 21b, 21c) and stator windings (18), wherein the lamination sheets (21, 21a, 21b, 21c) each comprise a stator tooth area (29) radially extending from a stator yoke area (33), and
- a rotor (6) comprising magnets (11), in particular permanent magnets (11), and being rotatable around a rotational axis (14) extending in an axial direction (13), wherein the magnets (11) and the stator windings (18) face each other via an air gap (10) between the stator (5) and the rotor (6), the air gap (10) extending in a circumferential (22) and axial direction (13),
wherein the at least one axial stack (40) of lamination sheets (21, 21a, 21b, 21c) further comprises at least one cooling channel (43) for a cooling fluid having at least one inlet opening (44) on an air gap side (45) and at least one outlet opening (46) at a radially opposite non-air gap side (47) of the stack of lamination sheets (21, 21a, 21b, 21c), characterized in that the inlet openings (44) and the outlet openings (46) are arranged in a staggered manner in axial direction (13), wherein each inlet opening (44) is associated with two axially shifted outlet openings (46) such that cooling fluid entering the cooling channel (43) through the inlet opening (44) flows axially in opposite courses and radially to the respective associated outlet openings (46).

## Description

The invention concerns a generator, in particular of a wind turbine, for producing electrical power, the generator comprising
- a stator comprising stacked lamination sheets and stator windings, wherein the lamination sheets each comprise a stator tooth area radially extending from a stator yoke area, and
- a rotor comprising magnets, in particular permanent magnets, and being rotatable around a rotational axis extending in an axial direction, wherein the magnets and the stator winding face each other via an air gap between the stator and the rotor, the air gap extending in a circumferential and axial direction,
wherein the at least one axial stack of lamination sheets further comprises at least one cooling channel for a cooling fluid having at least one inlet opening on an air gap side and at least one outlet opening at a radially opposite non-air gap side of the stack of lamination sheets.

The invention further concerns a wind turbine comprising such a generator.

Wind turbines serve to generate electrical power from wind power and hence comprise a generator, which is typically housed in a nacelle of the wind turbine.

Such a generator is well known and converts rotational power into electrical power. To achieve this, a rotor comprising magnets, in particular permanent magnets, may be rotated with respect to a stator of the generator which comprises stator windings facing the magnets of the rotor via an air gap. Due to the rotational movement of the rotor and hence the magnets relative to the windings, electrical current is induced in the stator windings. Both configurations in which an external or outer rotor is used, which rotates around the stator, as well as configurations having an internal rotor, in which the rotor rotates inside the stator, are known.

Direct drive generators have been proposed in state of the art wind turbines, which hence require no gear boxes. Instead, the rotor moves with the rotational speed of the rotor hub driven by interaction of the wind with wind turbine blades.

Of course, also other applications of such generators are known in the art. When such generators are used, heat is generated. The largest thermal losses occur in the coil windings. In known generators, in particular direct drive generators, the stator windings are supported by one or more stacks of lamination sheets, which usually define stator teeth. The stator windings can then be placed in spaces between the stator teeth. According to the state of the art, heat is removed from the stator windings and hence the coil by thermal conduction to the lamination. The stack of lamination sheets is then, in turn, cooled by air passing through the air gap. Additionally, it has been proposed to use a number of radially oriented air ducts through the at least one stack of lamination sheets. However, a large portion of the heat is conducted along the stacking direction of the stack of lamination sheets (axial direction), which features low thermal conductivity. In an exemplary embodiment, about 5 to 10 % of the lamination material may be removed to create the radial air ducts, also reducing the electromagnetic flux and hence deteriorating relevant properties.

EP 3 151 384 A1 discloses a generator preferably of a wind turbine, which comprises a stator and a rotor. The stator comprises stacked first and second lamination sheets with different through openings radially extending between air gap and non-air gap-side of the stator. First lamination sheets provide a through-opening extending in radial direction, while second lamination sheets comprise two through-openings providing radial inlet and outlet openings, such that radial air flow from the air gap-side to the non-air gap-side is achieved, providing improved cooling performance with a rather low pressure loss and a large cooling surface provided by the cooling ducts and connections. Hence, a localized radial flow of cooling fluid, in particular air, is provided.

To improve cooling along the length of the stator, an axial cooling channel from one end face of the stator to the other end face of the stator could be imagined. However, such an axial connection between the two faces of the stator would result in a huge pressure loss, as all air is forced through the same cross-section. Additionally, no flow in the air gap for additionally cooling the rotor would be present.

It is an object of the current invention to provide an efficient, easy to realize cooling scheme for the stator of a generator, in particular in a wind turbine, which allows improved cooling while maintaining magnetic flux properties.

This object is achieved by providing a generator according to claim 1 and a wind turbine according to claim 10. Advantageous embodiments are described in the dependent claims.

A generator according to the invention, which is in particular a, preferably direct drive, generator of a wind turbine, for producing electrical power comprises
- a stator comprising stacked lamination sheets and stator windings, wherein the lamination sheets each comprise a stator tooth area radially extending from a stator yoke area, and
- a rotor comprising magnets, in particular permanent magnets, and being rotatable around a rotational axis extending in an axial direction, wherein the magnets and the stator windings face each other via an air gap between the stator and the rotor, the air gap extending in a circumferential and axial direction.

The at least one axial stack of lamination sheets further comprises at least one cooling channel for a cooling fluid having at least one inlet opening on an air gap side and at least one outlet opening on a radially opposite non-air gap-side of the stack of lamination sheets, wherein the inlet openings and the outlet openings are arranged in a staggered manner in axial direction, wherein each inlet opening is associated with two axially shifted outlet openings such that cooling fluid entering the cooling channel through the inlet opening flows axially in opposite courses and radially to the respective associated outlet openings.

Hence, staggered inlet and outlet openings are proposed such that cooling fluid, in particular air, flowing in through the inlet opening splits into two portions, one directed to each associated outlet opening, such that the two portions move oppositely regarding the axial direction. This is because the outlet openings are displaced from the position of the inlet opening in two different directions of the axial direction, hence forcing opposing axial flows additionally to the radial flow.

Hence, an axial air duct is introduced, preferably in each stator tooth of the at least one stack of lamination sheets, which preferably goes through the entire length of the stack. The axial air duct or cooling channel is located close to the heat source, that is, the stator windings, and heat is conducted along the lamination sheets. To feed cooling fluid, in particular air, into the cooling channel, inlet and outlet openings are created along the air gap side and the opposite, non-air gap side, wherein, since staggered inlet openings and outlet openings are used, opposite axial velocities are created in the cooling channel, providing improved cooling performance and featuring lower pressure loss than what would occur in a simple purely axial cooling channel. In other words, the staggered inlet and outlet openings are virtually splitting the stator into smaller axial segments that are cooled by air flowing in from the air gap through an inlet opening and out through radially opposing associated outlet openings displaced from the position of the inlet opening in the axial direction.

In particular, this also allows relevant air flow through the air gap to the inlet openings, such that the rotor, in particular the magnets, can also be cooled. Preferably, the magnets are permanent magnets requiring less cooling, such that rotor cooling can be seen as secondary. The magnets are cooled by cooling fluid, in particular air, along the air gap, before the cooling fluid branches into the cooling channel through inlet openings for cooling the stator. The flow of cooling fluid along the air gap is maintained while the convective surfaces are moved closer to the source of the heat in comparison to radial air ducts. In other words, the cooling flow is focused closer to the main source of the heat, namely the stator windings, but because of the inlet openings from the air gap, cooling of the magnets of the rotor is maintained.

In summary, a high cooling performance combined with a rather low pressure loss and a large cooling surface is provided. The electromagnetic properties, in particular regarding magnetic flux in the lamination sheets, are not significantly deteriorated. In this context, it is noted that concentrated stator winding configurations are preferred, since the stator teeth are approximately of double width compared with distributed stator winding generators, allowing more room for implementing the cooling channel. Hence the thermal properties of the stator can be improved, in particular combined with electromagnetic improvements based on the design. This leads to a more efficient generator having lower temperatures and/or a higher rating.

Preferably, the staggered arrangement of inlet and outlet openings is symmetric at least with respect to the inlet opening. That is, the two outlet openings associated with an inlet opening may be axially displaced form the inlet opening by the same distance, such that the resulting parted air flow is also at least essentially symmetric.

As already mentioned, the cooling channel may axially extend at least essentially over the whole stator, that is, the stack of lamination sheets may comprise, for each stator tooth formed by stacked stator tooth areas, an axially open or closed cooling channel extending axially through the stator tooth. Whether an axially open cooling channel spatially spanning the whole axial length of the stator is used or the cooling channel is closed at the end faces of the stator mainly depends on the concrete geometrical design of the generator, in particular the occurring pressure losses. If the axial ends are left open, they may serve as replacement inlets inducing the axial flow of cooling fluid in the ends. However, if such a path would have significantly lower pressure loss than the flows leading through the air gap, a flow bypass would result which would not be preferred. Hence, in particular, for the concrete geometry of a generator, a pressure loss analysis can be performed to decide whether the ends should be open or closed.

Preferably, between two axially distanced inlet openings, one outlet opening associated with both inlet openings may be positioned. That is, as one inlet opening is associated with two outlet openings, at least inner outlet opening lying between two inlet openings may also be used for both these inlet openings, providing a simple design in which inlet openings and outlet openings follow after each other alternatingly.

Further preferably, each cooling channel may comprise an odd number of inlet openings, in particular at least three inlet openings, in particular equally distributed, along the length of the stator, such that multiple local axial and radial flows are generated. Further preferably, the outmost radial openings may be outlet openings, such that the number of outlet openings may be one plus the number of inlet openings.

For example, a sequence of outlet opening-inlet opening-outlet opening-inlet opening-outlet opening-inlet opening-outlet opening-inlet opening-outlet opening in axial direction may be used. An odd number of inlet openings, which are equally distributed along the axial direction, has the advantage that one inlet opening is positioned in the middle of the air gap, receiving cooling fluid from both sides and hence ensuring an axial air flow trough the whole air gap.

Preferably, the heat produced in the stator teeth by the currents of the stator windings will be transferred through the stacked lamination sheets to the cooling fluid over a short distance such that thermal hot spots in the stator teeth can be avoided. For example, the maximum distance between any point or location of a stator tooth and the nearest cooling channel may be less than 10 mm, in particular less than 5 mm, preferably less than 3.5 mm. Since, typically, the first and second lamination sheets may be covered with a coating being electrically non-conductive to prevent eddy currents, in preferred embodiments, the walls of the cooling channel may be free of coating to increase thermal conductivity and to simplify the production of the lamination sheets. Further preferably, the outer shape and dimensions of each lamination sheet used may be at least essentially identical.

In preferred embodiments, the width of a through opening in a lamination sheet to provide an outlet opening may increase in radial and in non-air gap direction to form a diffusor, such that the fluid flow resistance can be reduced. In this manner, a diffusor can be manufactured in an easy way by just cutting out corresponding through openings.

As already mentioned, the magnets are preferably permanent magnets, and may, for example comprise NdFeB. The thickness of the lamination sheets may, for example, be between 0.1 mm and 2 mm, and/or the nominal output power of the generator may be more than 100 kW, preferably more than 1.5 MW. In concrete examples, the lamination sheets may be fixed and/or embedded to each other by a resin.

In preferred embodiments, the stator may be segmented in circumferential direction into a plurality of stator segments, each formed by a stack of lamination sheets. This simplifies transporting and mounting of large stators. Hence, the stator can consist of multiple stacks of lamination sheets, each providing a basis for a stator segment.

In preferred concrete embodiments, the stacked lamination sheets may comprise
- first lamination sheets having a first through opening extending in radial direction and having an air gap-sided opening and a non-air gap-sided closed end,
- second lamination sheets having a second through opening extending in radial direction and having an air gap-sided closed end and a non-air gap-sided open end and
- third lamination sheets having a third through opening extending in radial direction and having air gap-sided and non-air gap-sided closed ends,
wherein the first, second and third through openings overlap and the stack of lamination sheets comprises at least one sequence of an outlet group of at least one second lamination sheet adjacent to a closed group of at least one third lamination sheet adjacent to an inlet group of at least one first lamination sheet adjacent to a closed group of at least one third lamination sheet adjacent to an outlet group of at least one second lamination sheet.

Hence, the stator can be constructed using only three different types of lamination sheets, namely first lamination sheets (for creating inlet openings), second lamination sheets (for creating outlet openings) and third lamination sheets for closed parts of the cooling channel. While, in principle, it may be conceivable to use only one lamination sheet for an inlet, outlet, or closed group, preferably, at least one of the groups, in particular all groups, may comprise multiple respective lamination sheets. For example, an inlet group and/or an outlet group may comprise 5 to 20 first/second lamination sheets, respectively. A closed group may, for example, comprise 5 to 50 or even more third lamination sheets, depending on the concrete air flows to be induced. The number of lamination sheets and hence axial length of inlet openings, outlet openings and closed cooling channel parts between inlet and outlet openings may, for example, be derived from calculations, simulations and/or measurements, depending on the concrete geometry of the generator and its stator.

In an exemplary embodiment, 50 to 60 % of the lamination sheets may be third lamination sheets, with the remaining 40 to 50 % of the lamination sheets between split at least essentially evenly between first and second lamination sheets. However, as already mentioned, these number are highly dependent on the concrete generator geometry.

In a preferred embodiment, the first and second through openings completely overlap the third through opening. That is, the third through opening defines dimensions of the cooling channel in circumferential and radial directions that are used over its whole axial length, wherein, to create an inlet or outlet opening, this basic shape is simply extended to be open on the respective radial side. In consequence, a uniform cooling channel shape is present in axial direction, thus reducing turbulences and inducing defined flows.

In preferred embodiments, the third through opening extends only in the tooth area of the third lamination sheets, where the heat has to be transported away from the stator windings. To provide a large surface covering most of the radial size of the stator tooth, the third through opening may have a radial height of at least 80 % of the height of the stator tooth, in particular at least 90 % of the height of the stator tooth. In some embodiments, the third through opening may stretch at least essentially the whole radial height of the stator tooth, and/or may even pultrude into the stator yoke area. However, in preferred embodiments, the non-air gap-sided closed end of the third through opening may be the non-air gap-sided end of the tooth area.

While the cooling channel may be axially open, that is, ending in at least one third lamination sheet at the axial end faces of the stator, the generator may also comprise at least two fourth lamination sheets having no through opening for axially closing the cooling channel at the end faces of the stator. Of course, the general remarks regarding open or closed axial ends of the cooling channel above also apply here.

Preferably, the width in circumferential direction of the cooling channel may be between 1 and 20 mm, in particular between 2 and 5 mm. This size has shown to be a good compromise between maintaining necessary electromagnetic properties and providing enough air flow for highly improved cooling. Furthermore, current manufacturing processes can still be applied to produce a stator having such cooling channels.

The invention also concerns a wind turbine, comprising a generator according to the invention. In particular, the wind turbine may be a direct drive wind turbine, respectively having a direct drive generator. Preferably, the rotor may be an external rotor surrounding the stator. All comments and features regarding the generator analogously apply to the wind turbine according to the invention, such that the same advantages are achieved.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle partial view of a wind turbine,
- Fig. 2: a principle cut view along the line II-II of the wind turbine generator shown in fig. 1,
- Fig. 3: a 3-dimensional view of a lamination sheet of the stator of fig. 2,
- Fig. 4: a detailed view of a first lamination sheet,
- Fig. 5: a detailed view of a second lamination sheet,
- Fig. 6: a detailed view of a third lamination sheet, and
- Fig. 7: a 3-dimensional partly cut view of a lamination sheet stack in a generator according to the invention.

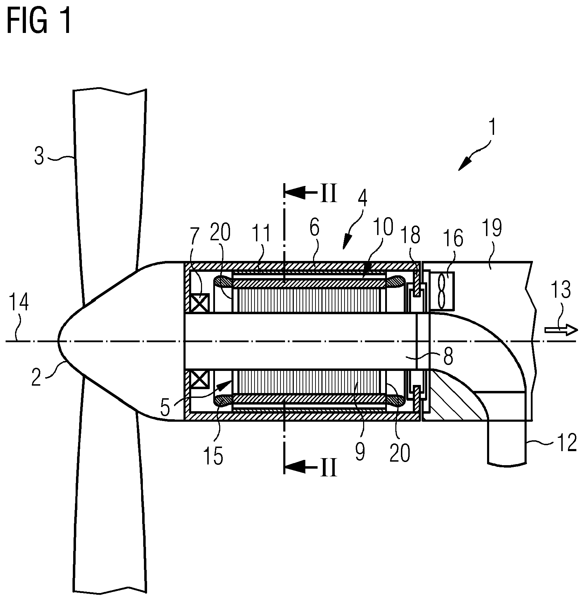

Fig. 1 shows a principle, cross-sectional view of a wind turbine 1 according to the invention. The wind turbine 1 is a direct-drive wind turbine which can be used in onshore as well as offshore applications. The wind turbine 1 comprises a rotatable rotor hub 2, to which a number of rotor blades 3, for example three rotor blades 3, are attached. The rotor hub 2 is adapted to transfer rotational movements to a rotor 6 of a generator 4 of the wind turbine 1. The rotor 6 is rotatably supported relative to a stator 5 and comprises permanent magnets 11 mounted on its inner surface and facing the stator 5. To achieve this, the rotor 6 is supported on a respective bearing unit 7 disposed on a non-rotatable hollow shaft 8, wherein the stator 5 is supported on a stator frame 9. The stator frame 9 is directly supported on the central hollow shaft 8 which is extending in a 90° rounded angle and connected to a vertical wind turbine tower 12.

An air gap 10 extends between the stator 5 and the permanent magnets 11 of the rotor 6 in axial direction 13. The radial dimensions of the air gap 10 are approximately 6 mm. The generator 4 has an external rotor configuration or "outer rotor 6 - inner stator 5" configuration. The rotational axis of the generator 4 is indicated at numeral 14. On the non-drive-end of the rotor 6, a rotor brake disc 15 may be mounted. On the drive end, the rotor 6 is connected to the rotor hub 2. One or several fans 16 located at the stator 5 or at the nacelle 19 operate to create a cooling fluid flow, in this case an air flow, in the generator 4 to provide a pressure difference between inlet and outlet openings of cooling channels as further discussed below.

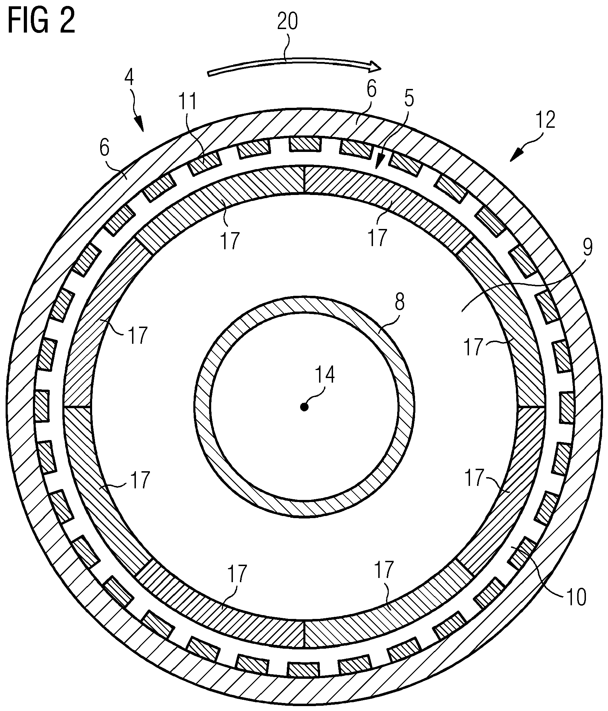

Fig. 2 is a principle cross-sectional view along the line II-II in fig. 1. The stator 5 is circumferentially segmented, i. e. comprises circumferentially disposed, ring-segment-like shaped stator segments 17. The rotor 6 comprises a number of permanent magnets 11 on the stator facing side. The stator segments 17 each hold a number of stator windings 18 (schematically indicated in fig. 1). The adjacent stator segments 17 are fixed to each other and are fixed to the stator frame 9 or to a stator plate 20 on each axial end of the stator 5.

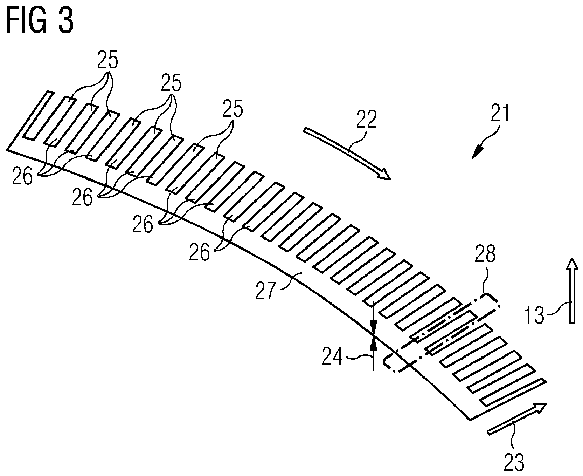

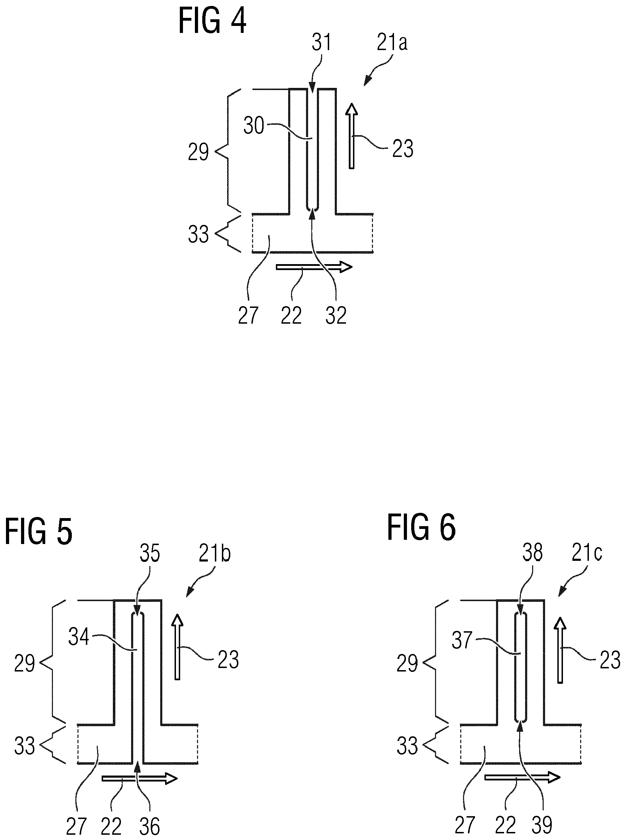

Fig. 3 is a general three-dimensional view of a lamination sheet 21. Multiple of such lamination sheets 21 may be stacked to form a stack of lamination sheets, in particular as a stator segment 17 of fig. 2. For the sake of simplicity, through openings are not yet shown in fig. 3, but will be explained regarding figs. 4 to 6.

The lamination sheet 21 as illustrated in fig. 3 covers a 60° sector of a circle and extends in circumferential direction 22 and radial direction 23. The thickness 24 in axial direction 13 may be between 0.1 and 2 mm, preferably between 0.5 and 0.8 mm, for example.

The lamination sheet 21 comprises multiple protrusions 25, which, when stacking multiple lamination sheets 21 on top of each other, form multiple stator teeth of the stator segment 17. Between the stator teeth, stator slots 26 are formed, wherein stator windings 18 are positioned. The protrusions 25 extend in radial direction 23 from a base part 27 of the lamination sheet 21, which upon stacking forms the stator yoke.

Figs. 4 to 6 each show a section 28 for multiple types of lamination sheets 21 comprising partially the base part 27 and one protrusion 25.

Fig. 4 shows the section 28 for a first lamination sheet 21a. As can be seen, the protrusion 25 in the stator tooth area 29 comprises a first through opening 30 extending in radial direction 23 and having an air gap-sided opening 31 and a non-air gap-sided closed end 32, which corresponds to the end of the stator tooth area 29 towards the stator yoke area 33. In fig. 4 and figs. 5 and 6, stator wedges are not shown for simplicity.

Fig. 5 shows a second lamination sheet 21b, which also comprises a radially extending second through opening 34, which, however, comprises an air gap-sided closed end 35 and a non-air gap-sided open end 36.

Finally, fig. 6 shows a third lamination sheet 21c, which has a third through opening 37 which also radially extends in the stator tooth area 29 and comprises closed ends 38, 39 both on the air gap and the non-air gap side.

As can be seen, the through openings 30 and 34 completely overlap the through openings 37, such that, if multiple lamination sheets 21a, 21b and 21c are stacked, a uniformly dimensioned cooling channel is formed in axial direction 13. Whenever first lamination sheets 21a are used, an inlet opening on the air gap side is formed, while second lamination sheets 21b provide an outlet opening on the non-air gap side of the respective stator segment 17.

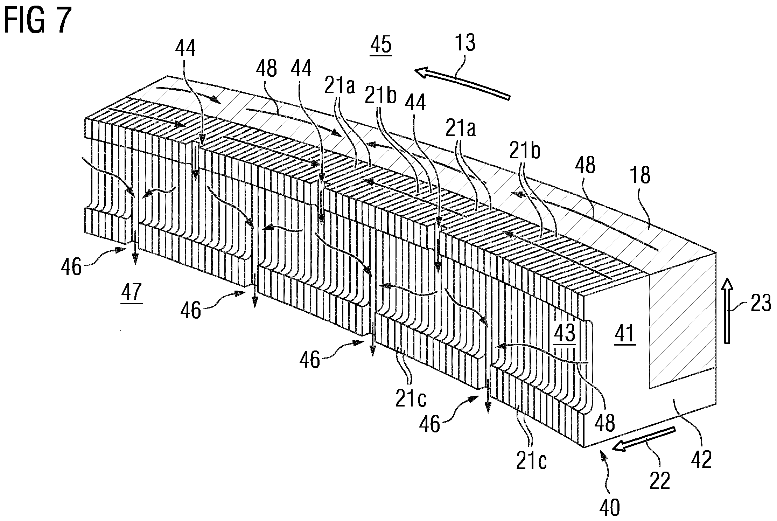

Fig. 7 shows a stack 40 lamination sheets 21 in a stator segment 17, where the stator tooth 41 is shown cut in the middle. As can be seen, a stator winding 18 is shown located in the slot adjacent to the stator tooth 41 on the stator yoke 42. The stack 40 in this exemplary example comprises multiple groups of lamination sheets 21 of the same type, namely closed groups of multiple third lamination sheets 21c, inlet groups of multiple first lamination sheets 21a and outlet groups of multiple second lamination sheets 21b. The sequence in axial direction 13 is: closed group - outlet group - closed group - inlet group - closed group - outlet group - closed group - inlet group - closed group - outlet group - closed group - inlet group - closed group - outlet group - closed group. In this manner, a cooling channel 43 spanning the whole axial length of the stator 5 having three inlet openings 44 on the air gap side 45 and four outlet openings 46 on the non-air gap side 47 is formed. The inlet openings 44 and the outlet openings 46 are staggered, that is, the positions of two opposing outlet openings 46 associated with an inlet opening 44 are displaced in axial direction 13 from the position of the inlet position 44. This leads to a certain, defined flow of air as the cooling fluid, as indicated by arrows 48.

As can be seen, air flowing into the air gap 10, thereby cooling stator windings 18 as well as the magnets 11 of the rotor 6, partly enters the inlet openings 44. In the cooling channel 43, the air flow splits into two parts for each outlet opening 46 associated with the respective inlet opening 44, such that two partial flows in axial and radial direction 13, 23 result, which are directed axially opposingly. As can be seen, the two central outlet openings 46 are associated with both neighboring inlet openings 44, that is, guiding the two respectively oriented partial flows to the non-air gap side 47.

In this manner, heat produced in the stator windings 18 and conducted through the lamination sheets 21 to the large cooling surface of the cooling channel 43 can be transported to the non-air gap side 47 by air as cooling fluid streaming through the cooling channel 43.

It is noted that, in this embodiment, the cooling channel 43 is axially open such that these axial openings serve as additional inlet openings for one axial air flow directed to the respective first outlet opening 46. In other embodiments, it is also possible to provide fourth lamination sheets 21 having no through opening to axially close the cooling channel 43 at the end. Additionally, it is noted that the axial length of the groups, that is, the number of lamination sheets 21 in each group, shown in fig. 7 is also merely exemplary; suitable, in particular optimal, configuration can be derived from calculations, simulations and/or measurements based on the concrete geometry of the generator 4, in particular regarding pressure losses.

The width of the cooling channel 43 in circumferential direction 22 may, for example, be between 1 and 20 mm, in particular between 2 and 5 mm.

Furthermore, as can be seen from fig. 6, the cooling channel height spans most of the stator tooth area 29, in this case having at least 90 % of the height of the stator tooth 41.

Although the present invention has been described in detail with reference to the preferred embodiment, the present invention is not limited by the disclosed examples from which the skilled person is able to derive other variations without departing from the scope of the invention.

## Claims

1. Generator (4), in particular of a wind turbine (1), for producing electrical power comprising
- a stator (5) comprising stacked lamination sheets (21, 21a, 21b, 21c) and stator windings (18), wherein the lamination sheets (21, 21a, 21b, 21c) each comprise a stator tooth area (29) radially extending from a stator yoke area (33), and
- a rotor (6) comprising magnets (11), in particular permanent magnets (11), and being rotatable around a rotational axis (14) extending in an axial direction (13), wherein the magnets (11) and the stator windings (18) face each other via an air gap (10) between the stator (5) and the rotor (6), the air gap (10) extending in a circumferential (22) and axial direction (13),
wherein the at least one axial stack (40) of lamination sheets (21, 21a, 21b, 21c) further comprises at least one cooling channel (43) for a cooling fluid having at least one inlet opening (44) on an air gap side (45) and at least one outlet opening (46) at a radially opposite non-air gap side (47) of the stack of lamination sheets (21, 21a, 21b, 21c), **characterized in that** the inlet openings (44) and the outlet openings (46) are arranged in a staggered manner in axial direction (13), wherein each inlet opening (44) is associated with two axially shifted outlet openings (46) such that cooling fluid entering the cooling channel (43) through the inlet opening (44) flows axially in opposite courses and radially to the respective associated outlet openings (46).

2. Generator (4) according to claim 1, **characterized in that** the stack of lamination sheets (21, 21a, 21b, 21c) comprises, for each stator tooth (41) formed by stacked stator tooth areas (29), an axially open or closed cooling channel (43) extending axially through the stator tooth (41).

3. Generator (4) according to claim 1 or 2, **characterized in that**, between two axially distanced inlet openings (44), one outlet opening (46) associated with both inlet openings (44) is positioned.

4. Generator (4) according to one of the preceding claims, **characterized in that** each cooling channel (43) comprises an odd number of inlet openings (44), in particular at least three inlet openings (44).

5. Generator (4) according to one of the preceding claims, **characterized in that** the stacked lamination sheets (21, 21a, 21b, 21c) comprise
- first lamination sheets (21a) having a first through opening (30) extending in radial direction (23) and having an air gap-sided opening (31) and a non-air gap-sided closed end (32),
- second lamination sheets (21b) having a second through opening (34) extending in radial direction (23) and having an air gap-sided closed end (35) and a non-air gap-sided open end (36), and
- third lamination sheets (21c) having a third through opening (37) extending in radial direction (23) and having air gap-sided and non-air gap-sided closed ends (38, 39),
wherein the first, second and third through openings (30, 34, 37) overlap and the stack (40) of lamination sheets (21, 21a, 21b, 21c) comprises at least one sequence of an outlet group of at least one second lamination sheet (21b) adjacent to a closed group of at least one third lamination sheet (21c) adjacent to an inlet group of at least one first lamination sheet (21a) adjacent to a closed group of at least one third lamination sheet (21c) adjacent to an outlet group of at least one second lamination sheet (21b).

6. Generator (4) according to claim 5, **characterized in that** at least one of the groups, in particular all groups, comprise multiple respective lamination sheets (21, 21a, 21b, 21c) .

7. Generator (4) according to claim 5 or 6, **characterized in that** the first and second through openings (30, 34) completely overlap the third through opening (37).

8. Generator (4) according to one of the claims 5 to 7, **characterized in that** the third through opening (37) extends only in the stator tooth area (29) of the third lamination sheets (21, 21a, 21b, 21c) and/or has a radial height of at least 80% of the height of the stator tooth (41), in particular at least 90% of the height of the stator tooth (41), and/or that the non-air gap-sided closed end (39) of the third through opening (37) is the non-air gap-sided end of the stator tooth area (29).

9. Generator (4) according to one of the preceding claims, **characterized in that** the width in circumferential direction (22) of the cooling channel (43) is between 1 and 20 mm, in particular between 2 and 5 mm.

10. Wind turbine (1), comprising a generator (4) according to one of the preceding claims.
